# EUROPEAN PATENT APPLICATION

(11) **EP 2 750 045 A1**
(43) Date of publication of application: **02.07.2014**
(21) Application number: 12826403.3
(22) Date of filing: 10.08.2012
(51) Int. Cl.: G06F 13/24

(54) **METHOD AND APPARATUS FOR ALLOCATING INTERRUPTS IN A MULTI-CORE SYSTEM**

(30) Priority: 23.08.2011 KR 20110084020
(71) Applicant: Samsung Electronics Co., Ltd., Suwon-si, Gyeonggi-do, 443-742 (KR)
(72) Inventor: HAN, Sang Bok, Suwon-si Gyeonggi-do 443-370 (KR); KIM, Hong Chul, Suwon-si Gyeonggi-do 443-709 (KR); YEO, In Choon, Suwon-si Gyeonggi-do 443-718 (KR); PARK, Jong-Chul, Anyang-si Gyeonggi-do 430-041 (KR)
(74) Representative: Nederlandsch Octrooibureau
(86) International application number: PCT/KR2012/006369
(87) International publication number: WO 2013/027951

(57) **Abstract**

The present invention relates to an apparatus and method for allocating interrupts in a multi-core system. According to one embodiment of the present invention, a method for allocating interrupts of an interrupt allocation apparatus including an interrupt control register unit, which records the interrupt processing capacity of each core of a multi-core system, can comprise: a reception step of receiving an interrupt; a checking step of checking the interrupt control register unit when receiving the interrupt; and an allocation step of allocating the interrupt to a core which has been checked to be in an interrupt processing enabled state in the checking step. When the core is allocated the interrupt, the core transmits, to the interrupt control register unit, a signal representing the interrupt control register corresponding to the core which is changed to an interrupt processing disabled state, and can process the interrupt. According to one embodiment of the present invention, the method for allocating interrupts and apparatus for efficient and rapid interrupt processing in a multi-core system can be provided.

## Description

### Technical Field

The present invention relates to an interrupt allocation method and apparatus. In more particularly, the present invention relates to a method and apparatus for allocating interrupts in a multi-core system including a plurality of cores.

### Background Art

In the past, researchers have used the method of increasing the clock frequency of the system core in order to improve the performance of computer and other computing systems. However, increasing the clock frequency of the core increases power consumption and hence the heat. This problem slows down the adoption of clock frequency-based performance enhancement technique in these days. In order to avoid, the researchers considers consider increasing the system performance by increasing the number of cores.

In the case of integrating a plurality of cores into a system, it may cause many problems. Interrupt processing is one of such problems. If an interrupt occurs in the single core system, the only core of the system is allocated the interrupt. Since only one core exists in the single core system, there is no better choice.

In the multi-core environment, however, the system has to determine the core to process a certain interrupt. If the system fails allocating the interrupt to an appropriate core or consumes so much time to allocate the interrupt, the advantage of multicore system cut is cut in half.

For example, the current interrupt may be allocated to a core which cannot process the interrupt instead of the core having the capability of processing the interrupt. This causes interrupt latency and may result in significant problem especially in a real-time system requiring real-time response.

The interrupt processing in Symmetric Multi-Processing (SMP) system may be classified into type types.

The first type of interrupt processing is characterized in that the core is selected depending on the type of the interrupt. The interrupts occurred by individual interrupt sources are may be processed by corresponding cores. In this case, the interrupts are processed in a distributed manner. Accordingly, the system adopting this type of interrupt processing scheme is capable of processing the interrupts more efficiently as compared to the system in which one core has to process all interrupts.

The second type of interrupt processing is characterized in that, when an interrupt occurs, an interrupt controller broadcasts the interrupt to all the cores. Afterward, the core selected in a software manner accepts the corresponding interrupt and notifies the other cores the interrupt allocation.

These conventional interrupt processing methods have many problems. The former method which allocates the interrupts occurring at the individual interrupt sources to the cores designated for the respective interrupt sources statically has the following problems. If the core responsible for processing the corresponding interrupt cannot process the interrupt immediately, it may increase the interrupt processing latency.

The latter method which broadcasts the interrupt to all the cores has other problems. In order to process an interrupt, a core accepts the interrupt and notifies the other cores of this to protect redundant processing of the interrupt. This complex process also causes interrupt processing latency.

### Disclosure of Invention

### Technical Problem

The present invention has been proposed to solve the above problems and aims to provide an interrupt allocation method and apparatus that is capable of processing interrupts efficiently and promptly in a multicore system.

### Solution to Problem

In accordance with an aspect of the present invention, an interrupt allocation method of an interrupt allocation apparatus equipped with an interrupt control register unit for registering interrupt processing capacities of individual cores of a multicore system includes receiving an interrupt, checking, when the interrupt is received, the interrupt control register unit, and allocating the interrupt to the core checked as available for processing the interrupt. The core sends, when the interrupt is allocated, the interrupt control register unit a signal for toggling an interrupt control register corresponding to the core to an interrupt processing-disabled state.

In accordance with another aspect of the present invention, an interrupt allocation apparatus of a multicore system includes an interrupt control register unit which register interrupt processing capacities of individual cores and an interrupt allocation unit which checks, when the interrupt is received, the interrupt control registers and allocates the interrupt to the core checked as available for processing the interrupt. The core sends, when the interrupt is allocated, the interrupt control register unit a signal for toggling an interrupt control register corresponding to the core to an interrupt processing-disabled state.

### Advantageous Effects of Invention

The interrupt allocation method and apparatus of the present invention is advantageous in processing interrupts efficiently and promptly in a multicore system.

### Brief Description of Drawings

FIG. 1 is a block diagram illustrating the interrupt allocation apparatus 100 according to an embodiment of the present invention.
FIG. 2 is a diagram illustrating the interrupt processing procedure of the interrupt allocation apparatus 100.
FIG. 3 is a flowchart illustrating the interrupt allocation procedure according to an embodiment of the present invention.
FIG. 4 is a flowchart illustrating the detail of step 340 of FIG. 3.

### Mode for the Invention

Exemplary embodiments of the present invention are described with reference to the accompanying drawings in detail.

Detailed description of well-known functions and structures incorporated herein may be omitted to avoid obscuring the subject matter of the present invention. This aims to omit unnecessary description so as to make the subject matter of the present invention clear.

For the same reason, some of elements are exaggerated, omitted or simplified in the drawings and the elements may have sizes and/or shapes different from those shown in drawings, in practice. The same reference numbers are used throughout the drawings to refer to the same or like parts.

A description is made of the interrupt allocation method and apparatus of a multicore system according to embodiments of the present invention with reference to the accompanying drawings.

In the following description, the term 'core' denotes a unit component capable of processing an interrupt.

In the following description, the term 'interrupt processing capacity' denotes an indicator indicating whether a certain core is in the state of capable of processing current interrupt. The core which is processing an interrupt currently cannot process another interrupt immediately. Accordingly, when a certain core is processing an interrupt currently, the interrupt processing capacity of the corresponding core is set to 'disabled'. Otherwise when a certain core is not processing any interrupt currently, the interrupt processing capacity is set to 'enabled'.

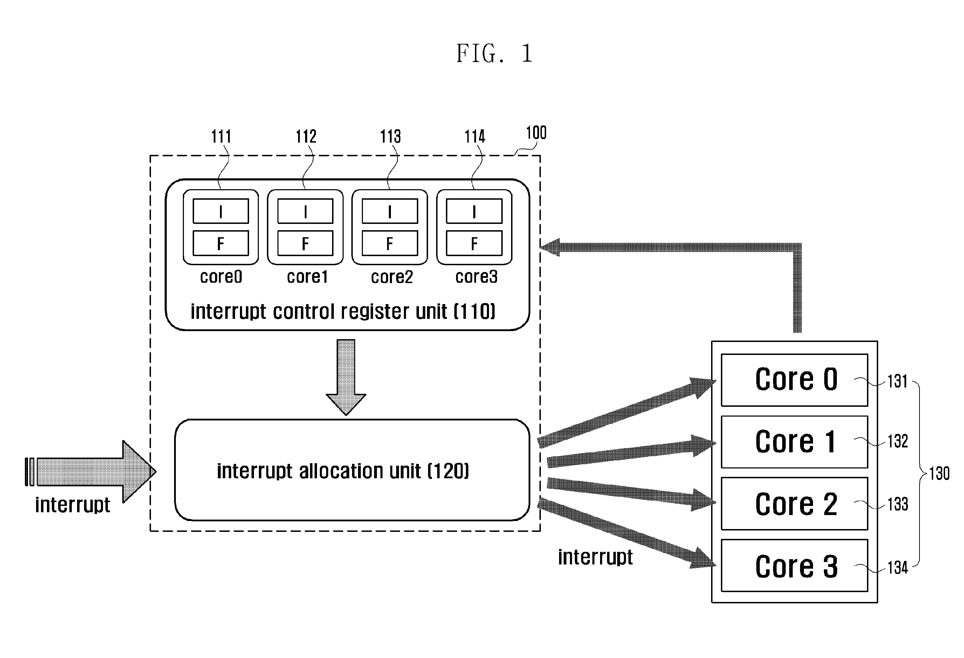

FIG. 1 is a block diagram illustrating the interrupt allocation apparatus 100 according to an embodiment of the present invention. The interrupt allocation apparatus 100 is embedded or attached to the multicore system to allocate interrupts occurring in the multicore system to the cores 130. The multicore system includes core 0 131, core 1 132, core 2 133, and core 3 134.

Referring to FIG. 1, the interrupt allocation apparatus 100 includes an interrupt control register unit 110 and an interrupt allocation unit 120.

The interrupt control register unit 110 registers the interrupt processing capacities of the cores 131, 132, 133, and 134. That is, the interrupt control register unit 110 may register the states of the cores 131, 132, 133, and 134 about whether they are capable of processing an interrupt, respectively. For example, the interrupt control register unit 110 may include a core 0 register 111, a core 1 register 112, a core 2 register 113, and a core 3 register 114. The registers constituting the interrupt control register unit 110 are referred to as interrupt control registers.

The core 0 register 111 registers the interrupt processing capacity of the core 0 131. The core 1 register 112 registers the interrupt processing capacity of the core 1 132. The core 2 register 113 registers the interrupt processing capacity of the core 2 133. The core 3 register 114 registers the interrupt processing capacity of the core 3 134. If a core is in the state capable of processing the current interrupt, the interrupt control register corresponding to the core registers the interrupt processing capacity as enabled. If a core is in the state incapable of processing the current interrupt, the interrupt register corresponding to the core registers the interrupt processing capacity as disabled.

Each interrupt control register may be a 1-bit register. For example, if the core 0 131 is in the state capable of processing the current interrupt, the core register 111 is set to 1. Otherwise if the core 0 131 is in the state incapable of processing the current interrupt, the core register 111 is set to 0. In the above-described embodiment, '1' indicates the interrupt processing capacity enabled and '0' indicates the interrupt processing capacity disabled. The term 'interrupt control register' may be used with the term 'interrupt flag' interchangeably. The term 'flag' is used to expresses the information indicating two state values of '0' and '1'. However, if there are more than two states, the register may have two more bits.

The interrupt control register unit 110 provides the interrupt allocation unit 120 with the information on the interrupt processing capacities of the individual cores. The interrupt allocation unit 120 may check the cores capable of processing the interrupt by referencing the interrupt control register unit 110.

The interrupt control register 110 may receive signals from the cores 130 and updates the interrupt control registers 111, 112, 113, and 114 according to signals. For example, the core which has allocated an interrupt sends the interrupt control register unit 110 a signal toggling the state of the corresponding interrupt control register to 'disabled'. Afterward, the core processes the allocated interrupt. After processing the interrupt, the core sends the interrupt control register unit 110 a signal for toggling the state of the corresponding interrupt control register to 'enabled'. The interrupt control register 110 updates the interrupt control registers 111, 112, 113, and 114 according to the signal received from the core.

The interrupt control register 110 may register the state indicating which type of interrupt the core is capable of processing. Suppose that there are two types of interrupts occurring in the multicore system: normal interrupt and fast interrupt. In this case, the interrupt control register unit 110 may have an I field and an F filed. The I field indicates the state on whether the core is capable of processing the normal interrupt. The F field indicates the state on whether the core is capable of processing the fast interrupt.

Here, the normal interrupt is the interrupt occurring at a normal input/output device. Examples of the normal interrupt may include internal timer and serial and external interrupt input.

The fast interrupt is similar in principle to the normal interrupt. However, the core processes the fast interrupt at faster speed as compared to the normal interrupt. The source of the normal interrupt may be mostly mapped as the source of the fast interrupt. For example, a timer interrupt may be processed as normal interrupt or fast interrupt.

Here, the I and F fields are just exemplary fields. According to another embodiment, the interrupt control register unit 110 may register only one type of interrupt processing capacity. In another exemplary embodiment, the interrupt control registers 110 may register three or more types of interrupt processing capacities. The interrupt control register unit 110 may register a preemption/non-preemption state of each core. The preemption/non-preemption state indicates whether the corresponding core has preoccupied a specific resource for processing interrupt. For convenience sake, it is assumed that the interrupt control register unit 110 registers only the normal interrupt processing capacity.

The interrupt control register unit 110 has to guarantee synchronization. For example, it is assumed that the interrupt allocation unit 120 references the interrupt control register unit 110 to verify the interrupt processing capacity of the core 1 132 and allocates the interrupt to the core 1 132. In this case it has to be barred that the core 1 132 transitions to a state incapable of processing any interrupt before the interrupt is allocated. In the case that the interrupt allocation unit 120 processes interrupts one by one, no synchronization problem occurs. However, if the interrupt allocation unit 120 allocates a plurality of interrupts in parallel, this may cause any problem. In order to overcome this problem, it is necessary to guarantee that interrupt processing process or other components do not change the states of the interrupt control registers 111, 112, 113, and 114 right before the interrupt allocation unit 120 allocates the interrupt since it has referenced the interrupt control register unit 110 for interrupt allocation.

The interrupt control register unit 110 has to be discriminated from the state registers of the respective cores 131, 132, 133, and 134. The interrupt control register unit 110 is a set of physical registers. Thanks to this configuration, the interrupt allocation unit 120 is capable of checking the plural registers 111, 112, 113, and 114 of the interrupt control register unit 110 in a short time. Accordingly, it is possible to allocate interrupts efficiently.

The interrupt allocation unit 120 references the interrupt control register unit 110 to allocate an interrupt to a suitable core. The interrupt allocation unit 120 references the interrupt control register unit 110 to check the cores in the state capable of processing the interrupt. Depending on the checking result, the interrupt allocation unit 120 may allocate the interrupt to the suitable core. Once the interrupt is allocated, the core processes the interrupt as described above in the explanation about the interrupt control register unit 110.

The interrupt allocation unit 120 may check a plurality of interrupt control registers 111, 112, 113, and 114 simultaneously to select the cores capable of interrupts. In this case, it is possible to allocate the interrupt to one of the cores capable of processing the interrupt. In an alternative embodiment, the interrupt may be allocated according to a predetermined rule or in an order of priority.

In another alternative embodiment, the interrupt allocation unit 120 may check some of the interrupt control registers with priority other than all the interrupt control registers. In this case, the interrupt allocation unit 120 may references the recent interrupt allocation history for efficient interrupt allocation. For example, the interrupt allocation unit 120 may check the interrupt control register corresponding to the next core of the core which has been allocated an interrupt lastly with priority. Here, it is assumed that the cores have virtual serial numbers. The interrupt allocation unit 120 also may check the interrupt control register corresponding to the core which has been allocated the interrupt most previously based on the last interrupt allocation times of the respective cores. According to this policy, it is possible to prevent the interrupt from being allocated to the same core repeatedly.

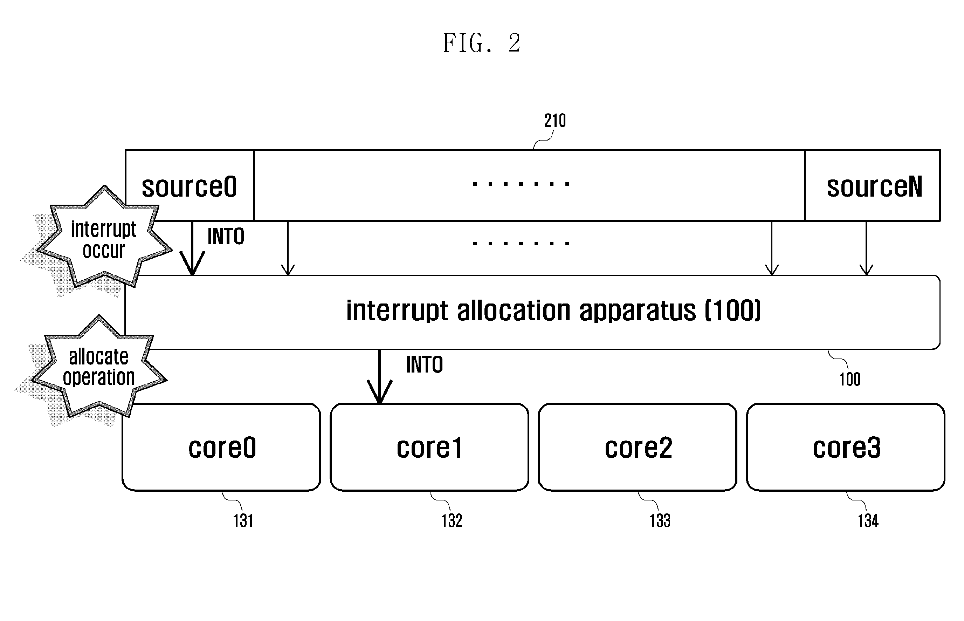

FIG. 2 is a diagram illustrating the interrupt processing procedure of the interrupt allocation apparatus 100.

An interrupt (INTO) is generated by one of the interrupt sources 210. If the interrupt source generates the interrupt, the interrupt allocation apparatus 100 receives the interrupt. The interrupt allocation apparatus 100 allocates the interrupt to the suitable core dynamically through the procedure described with reference to FIG. 1. It is assumed that the core 1 register 112 corresponding to the core 1 132 is set to the state capable of processing an interrupt when the interrupt allocation apparatus 100 receives the interrupt (INTO). The interrupt allocation unit 120 references the interrupt control register unit 110 to verify that the core 1 132 is in the state capable of processing the interrupt. In this case, the interrupt allocation unit 120 allocates the interrupt (INTO) to the core 1 131. If the interrupt is allocated, the core 1 131 resets the interrupt processing capacity of the core 1 register 111 to 'disabled'. Then the core 1 131 processes the interrupt. If the interrupt has been processed completely, the core 1 131 resets the interrupt process capacity of the core 1 register 111 to 'enabled'.

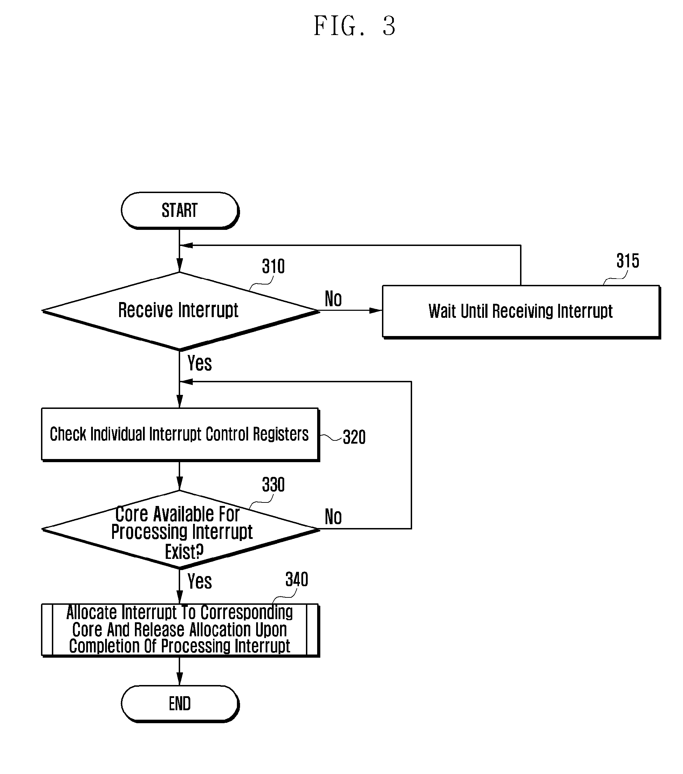

FIG. 3 is a flowchart illustrating the interrupt allocation procedure according to an embodiment of the present invention.

The interrupt allocation unit 120 monitors to determine whether an interrupt is received at step 310. If no interrupt is received, the interrupt allocation unit 120 waits until any interrupt is detected at step 315. If an interrupt is received, the procedure goes to step 320.

The interrupt allocation unit 120 checks the individual interrupt control registers 111, 112, 113, and 114 at step 320. That is, the interrupt allocation unit 120 checks the interrupt control registers 111, 112, 113, and 114 of the interrupt control register unit 110. As described above, the interrupt control registers 111, 112, 113, and 114 indicate the interrupt processing capacities of the respective cores. The interrupt allocation unit 120 references the check result of step 320 to determine whether there is at least one core capable of processing the interrupt at step 330. In the case that all interrupt control registers 111, 112, 113, and 114 are in the state incapable of processing any interrupt, the interrupt allocation unit 120 determines that there is no available core capable of processing the interrupt. In this case, the procedure goes to step 320 where the interrupt allocation apparatus 100 repeats steps 320 and 330. If there is at least one core capable of processing the interrupt, e.g. if the core 1 register 112 indicates the state capable of processing interrupt, the interrupt allocation apparatus 120 determines that there is any core available for processing the interrupt. In this case, the procedure goes to step 340.

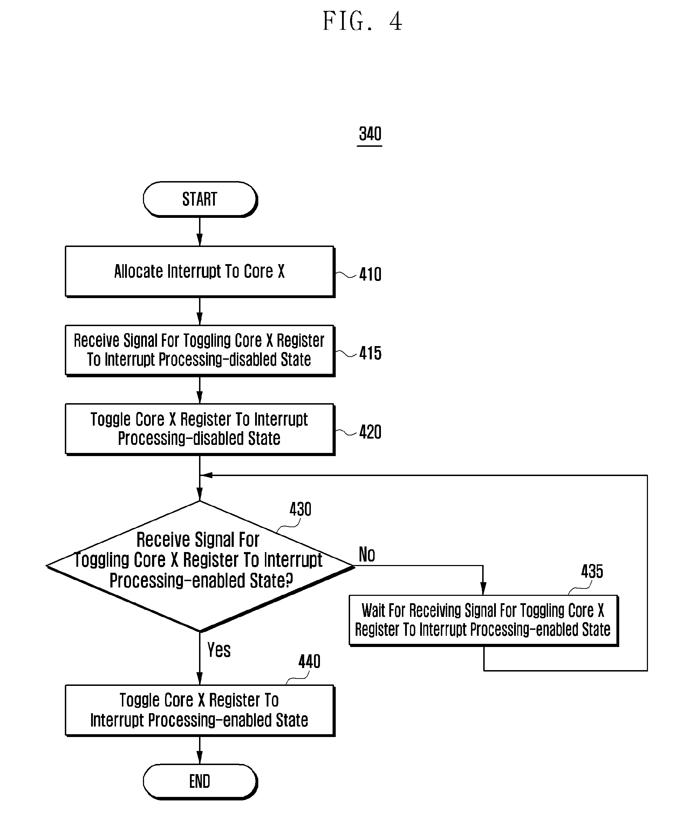

At step 340, the interrupt allocation unit 120 allocates the interrupt to the core available for processing the interrupt. If the interrupt has been processed completely, the interrupt allocation is released. Step 340 is described in more detail with reference to FIG. 4.

FIG. 4 is a flowchart illustrating the detail of step 340 of FIG. 3.

The interrupt allocation unit 120 allocates the interrupt to the core available for processing the interrupt at step 410. Suppose that the interrupt allocation unit 120 allocates an interrupt to core x, e.g. core 1 132. The core x and core x register are the core and interrupt control register correspond to each other. In the following, the description is made under the assumption that the core x is the core 1 132 and the core x register is the core 1 register 112.

The interrupt control register 110 receives a signal for toggling the core 1 register 1120 corresponding to the core x, e.g. core 1 132, to the interrupt processing disabled state at step 415. If the interrupt is allocated, the core 1 132 enters the state incapable of processing other interrupts. Accordingly, sends the interrupt control register unit 110 the signal for toggling the core 1 register 112 corresponding to the core 1 132 to the interrupt processing-disabled state.

The interrupt control register unit 110 toggles the core 1 register 112 corresponding to the core 1 132 to the interrupt processing-disabled state at step 420. The toggling at step 420 is performed according to the signal received at step 415. That is, the interrupt control register unit 110 toggles the core 1 register 112 to the interrupt processing-disabled state.

The interrupt control register unit 110 determines whether a signal for toggling the state of the core 1 register 112 to the interrupt processing-enabled state from the core 1 132 at step 430. The signal for toggling the state of the core 1 register 112 to the interrupt processing-enabled state may be the signal indicating the completion of processing the corresponding interrupt signal. If the interrupt control register unit 110 receives a signal for toggling the core 1 register 112 to the interrupt processing-enabled state, the pressure goes to step 440. If the interrupt control register unit 110 does not receive the corresponding signal, the procedure goes to step 435 where the interrupt control register unit 110 waits until the corresponding signal is received.

At step 440, the interrupt control register unit 110 toggles the core 1 register 112 to the interrupt processing-enabled state. Since the signal for toggling the core 1 register 112 to the interrupt processing-enabled state has been received, the interrupt control register unit 110 toggles the core 1 register 112 according to the signal. If the core 1 register 112 is toggled to the interrupt processing-enabled state, the interrupt allocation unit 120 recognizes that the core 1 132 is in the state capable of processing the interrupt and considers interrupt allocation thereto.

It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks. The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

Furthermore, the respective block diagrams may illustrate parts of modules, segments or codes including at least one or more executable instructions for performing specific logic function(s). Moreover, it should be noted that the functions of the blocks may be performed in different order in several modifications. For example, two successive blocks may be performed substantially at the same time, or may be performed in reverse order according to their functions.

The term "module" according to the embodiments of the invention, means, but is not limited to, a software or hardware component, such as a Field Programmable Gate Array (FPGA) or Application Specific Integrated Circuit (ASIC), which performs certain tasks. A module may advantageously be configured to reside on the addressable storage medium and configured to be executed on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. In addition, the components and modules may be implemented such that they execute one or more CPUs in a device or a secure multimedia card.

The foregoing disclosure has been set forth merely to illustrate the invention and is not intended to be limiting. Since modifications of the disclosed embodiments incorporating the spirit and substance of the invention may occur to persons skilled in the art, the invention should be construed to include everything within the scope of the appended claims and equivalents thereof.

Although exemplary embodiments of the present invention have been described in detail hereinabove with specific terminology, this is for the purpose of describing particular embodiments only and not intended to be limiting of the invention. While particular embodiments of the present invention have been illustrated and described, it would be obvious to those skilled in the art that various other changes and modifications can be made without departing from the spirit and scope of the invention.

## Claims

1. An interrupt allocation method of an interrupt allocation apparatus equipped with an interrupt control register unit for registering interrupt processing capacities of individual cores of a multicore system, the method comprising:
receiving an interrupt;
checking, when the interrupt is received, the interrupt control register unit; and
allocating the interrupt to the core checked as available for processing the interrupt,
wherein the core sends, when the interrupt is allocated, the interrupt control register unit a signal for toggling an interrupt control register corresponding to the core to an interrupt processing-disabled state.

2. The method of claim 1, wherein the core sends, after processing the interrupt completely, the interrupt control register unit a signal for toggling the interrupt control register corresponding to the core to an interrupt processing-enabled state.

3. The method of claim 2, wherein the interrupt control register unit toggles the interrupt control register corresponding to the core according to the signal from the core.

4. The method of claim 1, wherein the interrupt control register unit registers a plurality of types of interrupt processing capacities of individual cores.

5. The method of claim 1, wherein the interrupt control register unit registers preemption/non-preemption states of the respective cores.

6. The method of claim 1, wherein the interrupt control register unit is a set of physical registers registering the interrupt processing capacities of the respective cores.

7. An interrupt allocation apparatus of a multicore system, the apparatus comprising:
an interrupt control register unit which register interrupt processing capacities of individual cores; and
an interrupt allocation unit which checks, when the interrupt is received, the interrupt control registers and allocates the interrupt to the core checked as available for processing the interrupt,
wherein the core sends, when the interrupt is allocated, the interrupt control register unit a signal for toggling an interrupt control register corresponding to the core to an interrupt processing-disabled state.

8. The apparatus of claim 7, wherein the core sends, after processing the interrupt completely, the interrupt control register unit a signal for toggling the interrupt control register corresponding to the core to an interrupt processing-enabled state.

9. The apparatus of claim 8, wherein the interrupt control register unit toggles the interrupt control register corresponding to the core according to the signal from the core.

10. The apparatus of claim 7, wherein the interrupt control register unit registers a plurality of types of interrupt processing capacities of individual cores.

11. The apparatus of claim 10, wherein the interrupt control register unit registers preemption/non-preemption states of the respective cores.

12. The apparatus of claim 7, wherein the interrupt control register unit is a set of physical registers registering the interrupt processing capacities of the respective cores.
